# EUROPÄISCHE PATENTSCHRIFT

(11) **EP 3 670 907 B1**
(45) Veröffentlichungstag und Bekanntmachung des Hinweises auf die Patenterteilung: **31.08.2022**
(21) Anmeldenummer: 19214199.2
(22) Anmeldetag: 06.12.2019
(51) Int. Cl.: F04B 17/04, F04B 43/04, H01F 7/18, F04B 43/00, F04B 49/06, F04B 53/00

(54) **VERFAHREN ZUM BETREIBEN EINER PUMPE UND SYSTEM MIT EINER SOLCHEN PUMPE**
METHOD FOR OPERATING A PUMP AND SYSTEM COMPRISING SUCH A PUMP
PROCÉDÉ DE FONCTIONNEMENT D'UNE POMPE ET SYSTÈME DOTÉ D'UNE TELLE POMPE

(30) Priorität: 21.12.2018 DE 102018222731
(43) Veröffentlichungstag der Anmeldung: 24.06.2020
(73) Patentinhaber: Robert Bosch GmbH, 70442 Stuttgart (DE)
(72) Erfinder: Joshi, Rohit, 71229 Leonberg (DE)

(56) Entgegenhaltungen:
- DE-A1-102015 201 463
- DE-A1-102016 217 842
- US-A- 4 318 155
- US-A1- 2009 160 590
- US-A1- 2014 227 107

## Beschreibung

Die vorliegende Erfindung betrifft ein Verfahren zum Betreiben einer Pumpe, ein Computerprogramm zu dessen Durchführung sowie ein System mit einer solchen Pumpe und einer Recheneinheit.

### Stand der Technik

Bei einer Nachbehandlung von Abgasen in Kraftfahrzeugen kann, insbesondere zur Reduktion von Stickoxiden (NOₓ) das sog. SCR-Verfahren (engl.: Selective Catalytic Reduction) zum Einsatz kommen. Dabei wird eine Harnstoff-Wasser-Lösung (HWL) als Reduktionsmittellösung in das typsicherweise sauerstoffreiche Abgas eingeführt. Hierfür kann ein Dosierventil verwendet werden, das eine Düse umfasst, um die HWL in den Abgasstrom einzusprühen. Stromaufwärts eines SCR-Katalysators reagiert die Harnstoff-Wasser-Lösung zu Ammoniak, welcher sich anschließend am SCR-Katalysator mit den Stickoxiden verbindet, woraus Wasser und Stickstoff entstehen.

Das Dosierventil ist typischerweise über eine Druckleitung mit einer Fördereinheit verbunden. Eine Pumpe bzw. Förderpumpe der Fördereinheit pumpt die Harnstoff-Wasser-Lösung aus einem Reduktionsmitteltank zum Dosierventil bzw. zu einem Dosiermodul. Zusätzlich ist meistens ein Rücklauf mit dem Reduktionsmitteltank verbunden, über den überschüssige Harnstoff-Wasser-Lösung zurückgeführt werden kann. Eine Blende oder Drossel im Rücklauf kann den Rückfluss steuern.

Die DE 10 2015 201463 A1 offenbart, dass in einem Kraftstoffsystem (10) einer Brennkraftmaschine Kraftstoff von einer Hochdruckpumpe (16) in ein Kraftstoffrail (18) gefördert wird. Die Menge des geförderten Kraftstoffs wird durch ein von einer elektromagnetischen Betätigungseinrichtung (34) betätigtes Mengensteuer ventil (30) beeinflusst. Es wird vorgeschlagen, dass mindestens ein Parameter eines Bremsimpulses der elektromagnetischen Betätigungseinrichtung (34) von einer Effizienz der elektromagnetischen Betätigungseinrichtung und/oder von einer Temperatur, insbesondere einer Komponente des Kraftstoffeinspritzsystems (10) oder der Brennkraftmaschine, abhängt.

### Offenbarung der Erfindung

Erfindungsgemäß werden ein Verfahren zum Betreiben einer Pumpe, ein Computerprogramm zu dessen Durchführung sowie ein Sys tem mit einer solchen Pumpe und einer Recheneinheit mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung geht aus von einem Verfahren zum Betreiben einer Pumpe mit einem Pumpenraum, der wenigstens einen Anschluss aufweist, und einem mittels Federkraft beaufschlagten elektromagnetischen Linearaktor, der durch Anlegen einer Spannung gegen die Federkraft bewegbar bzw. betätigbar ist. Zweckmäßig sind dabei insbesondere zwei Anschlüsse, sodass über einen Anschluss ein Fluid in den Pumpenraum zugeführt und über den anderen Anschluss abgeführt werden kann. Bei dem elektromagnetischen Linearaktor handelt es sich insbesondere um einen Elektromagneten mit einem beweglichen Anker, wobei an den Elektromagneten bzw. an dessen Spule eine Spannung angelegt werden kann, um ein magnetische Kraft zu erzeugen, die den Anker in eine Richtung bewegt. Dabei wird der Anker gegen die Federkraft bewegt. Für eine Bewegung in Richtung der Federkraft hingegen darf keine magnetische Kraft auf den Anker ausgeübt werden oder vorhanden sein, die die Federkraft übersteigt.

Dabei wird nun durch eine Bewegung des elektromagnetischen Linearaktors in eine erste Richtung Fluid durch einen Anschluss in den Pumpenraum gesaugt und durch eine Bewegung des elektromagnetischen Linearaktors in eine zweite - dann der ersten Richtung entgegengesetzte - Richtung wird Fluid durch einen Anschluss aus dem Pumpenraum verdrängt. Wenn zwei Anschlüsse im Pumpenraum vorhanden sind, werden für das Ansaugen und Verdrängen, wie erwähnt, typischerweise zwei verschiedene Anschlüsse verwendet. Um den jeweils anderen Anschluss, durch den gerade kein Fluid gefördert wird, zu verschließen, können geeignete Ventile wie Rückschlagventile vorgesehen sein.

Die erste Richtung kann dabei die Richtung der Federkraft sein, die zweite Richtung entsprechend der Federkraft entgegengerichtet, d.h. diejenige, wofür eine magnetische Kraft mittels des Linearaktors erzeugt werden muss. Diese beiden Richtungen können jedoch auch vertauscht sein. Hierbei ist letztlich nur die gewünschte Anbindung des elektromagnetischen Linearaktors an den Pumpenraum bzw. die Membran maßgeblich.

Als eine solche Pumpe mit elektromagnetischem Linearaktor kommt dabei insbesondere eine sog. Membranpumpe in Betracht. Hierbei ist der Pumpenraum auf einer Seite mit einer flexiblen Membran verschlossen, wobei der elektromagnetische Linearaktor derart an den Pumpenraum bzw. die Membran angebunden ist, dass bei Bewegung des Linearaktors die Membran bewegt wird, sodass das Volumen im Pumpenraum vergrößert bzw. verkleinert wird. In SCR-Systemen bzw. in Fördereinheiten von SCR-Systemen können solche Pumpen besonders bevorzugt eingesetzt werden.

Mittels einer solchen Pumpe kann nun besonders einfach ein Fluid wie Harnstoff-Wasser-Lösung gepumpt werden, beispielsweise von einem Reduktionsmitteltank zu einem Dosiermodul. Für ein kontinuierliches Pumpen kann der elektromagnetische Linearaktor abwechselnd in die erste und die zweite Richtung - bzw. hin und her - bewegt werden. Für eine Bewegung gegen die Federkraft ist eine ausreichendend hohe Spannung an den elektromagnetischem Linearaktor bzw. dessen Spule anzulegen, sodass eine magnetische Kraft erzeugt wird, die die Federkraft übersteigt. Sobald die Bewegung in die eine Richtung beendet ist, kann die Spannung wieder weggenommen werden, sodass durch die Federkraft der elektromagnetische Linearaktor in die andere Richtung bewegt wird. Anschließend kann wieder die Spannung angelegt werden.

Es ist zwar nun an sich wünschenswert, eine Pump- bzw. Förderleistung einer solchen Pumpe zu erhöhen, allerdings führt dies typischerweise zu lauteren Störgeräuschen, die unerwünscht sind.

Erfindungsgemäß wird nun bei einer Bewegung des elektromagnetischen Linearaktors in Richtung der Federkraft wenigstens zeitweise eine Spannung derart angelegt, dass eine in dem elektromagnetischen Linearaktor vorhandene magnetische Energie zumindest teilweise aktiv abgebaut wird. Die Spannung weist hierfür typischerweise eine Polung auf, die derjenigen Spannung, die nötig ist, um den elektromagnetischen Linearaktor gegen die Federkraft zu bewegen, entgegengesetzt ist. Auf diese Weise kann der nach üblichem Abschalten bzw. Wegnehmen der Spannung noch in der Spule des elektromagnetischen Linearaktors fließende Strom aktiv abgebaut werden, sodass entsprechend die magnetische Kraft, die der Federkraft entgegenwirkt, schneller abgebaut wird. Dies bewirkt eine schnellere Bewegung des elektromagnetischen Linearaktors.

Bei der Bewegung des elektromagnetischen Linearaktors in Richtung der Federkraft wird eine Spannung derart angelegt, dass nach Beginn der Bewegung die in dem elektromagnetischen Aktor vorhandene magnetische Energie zu einem vorgegebenen Anteil kleiner 100% aktiv abgebaut wird, also nicht vollständig. Dieser vorgegebene Anteil beträgt zwischen 10% und 50%. Sobald dieser Anteil erreicht ist, wird die Spannung wieder weggenommen.

Es hat sich herausgestellt, dass auf diese Weise zwar einerseits eine schnellere Bewegung des elektromagnetischen Linearaktors erreicht werden kann, was insgesamt die Förderleistung der Pumpe erhöhen kann. Andererseits wird ein zu schnelles Ende der Bewegung aber nicht erreicht, was zu einer geringeren Geräuschentwicklung führt.

Weiterhin wird die Spannung vor oder bei Ende der Bewegung erneut angelegt, und zwar derart, dass die in dem elektromagnetischen Aktor noch vorhandene magnetische Energie vollständig aktiv abgebaut wird. Damit kann zum Ende der Bewegung, wenn eine unerwünscht hone Geräuschentwicklung nicht zu erwarten ist, trotzdem noch der elektromagnetische Linearaktor entladen werden, sodass eine nachfolgende Bewegung in die wieder entgegensetzte Richtung ordnungsgemäß und schnell erfolgen kann.

Zwischen dem Anlegen der Spannung, mit der der vorgegebene Anteil der magnetischen Energie aktiv abgebaut wird, und dem Anlegen der Spannung, mit der die in dem elektromagnetischen Aktor noch vorhandene magnetische Energie vollständig aktiv abgebaut wird, werden wenigstens eine vorgegebene Zeitdauer und/oder Bewegungsstrecke des elektromagnetischen Linearaktors vorgesehen bzw. abgewartet. Diese Zeitdauer bzw. Bewegungsstrecke kann, beispielsweise basierend auf Test- oder Simulationswerten, derart gewählt werden, dass die Bewegung vollständig oder nahezu vollständig abgeschlossen ist.

Gegenstand der Erfindung ist auch ein System mit einer Pumpe mit einem Pumpenraum, der wenigstens einen Anschluss aufweist, und einem mittels Federkraft beaufschlagten elektromagnetischen Linearaktor und mit einer Recheneinheit. Dieses System kann insbesondere als SCR-Versorgungssystem ausgebildet sein.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

- Figur 1: zeigt schematisch ein erfindungsgemäßes SCR-Versorgungssystem in einer bevorzugten Ausführungsform.
- Figur 2: zeigt schematisch eine Pumpe, wie sie im Rahmen eines erfindungsgemäßen Verfahrens verwendet werden kann.
- Figur 3: zeigt schematisch einen üblichen Ablauf zur Betätigung einer Pumpe, wie sie im Rahmen eines nicht-erfindungsgemäßen Verfahrens verwendet werden kann.
- Figur 4: zeigt schematisch einen Ablauf des erfindungsgemäßen Verfahrens in einer bevorzugten Ausführungsform.
- Figur 5: zeigt schematisch einen Ablauf eines weiteren nichterfindungsgemäßen Verfahrens.

### Ausführungsform(en) der Erfindung

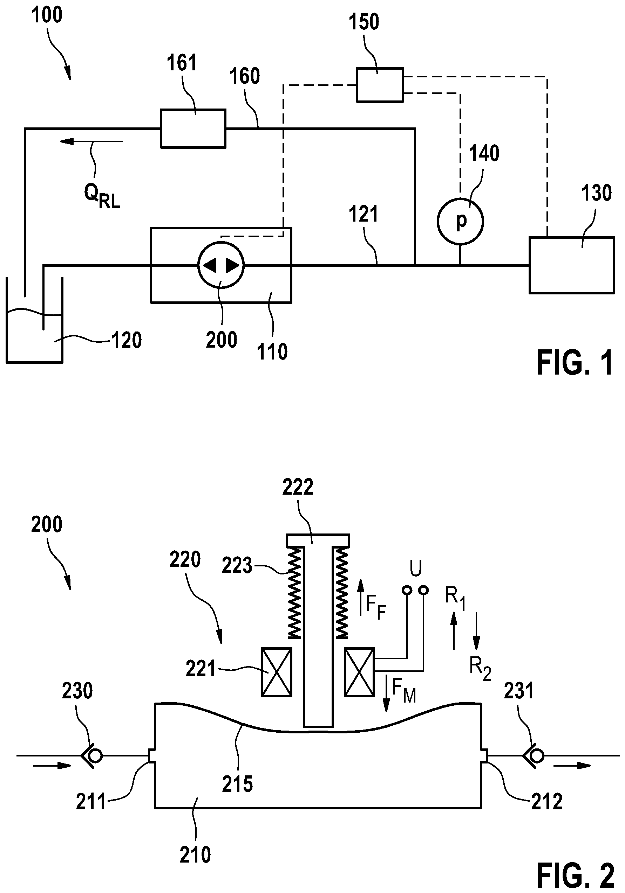

In Figur 1 ist schematisch und beispielhaft ein als SCR-Versorgungssystem ausgebildetes, erfindungsgemäßes System 100 in einer bevorzugten Ausführungsform dargestellt. Das SCR-Versorgungssystem 100 umfasst eine Fördereinheit 110, die eine Pumpe bzw. Förderpumpe 200 aufweist, die dazu eingerichtet ist, Reduktionsmittel aus einem Reduktionsmitteltank 120 über eine Druckleitung 121 zu einem Dosiermodul oder Dosierventil 130 zu fördern.

Dort wird das Reduktionsmittel dann in einen nicht dargestellten Abgasstrang einer Brennkraftmaschine gesprüht. Weiterhin ist ein Drucksensor 140 vorgesehen, der dazu eingerichtet ist, einen Druck p zumindest in der Druckleitung 121 zu messen. Eine als Steuergerät ausgebildete Recheneinheit 150 ist mit dem Drucksensor 140 verbunden und erhält von diesem Informationen über den Druck p in der Druckleitung 121. Außerdem ist das Steuergerät 150 mit dem Fördermodul 110, und dort insbesondere mit der Pumpe 200, sowie mit dem Dosierventil 130 verbunden und kann diese ansteuern.

Zudem umfasst das System 100 einen Rücklauf 160, durch den Reduktionsmittel aus dem System zurück (vgl. Q_{RL}) in den Reduktionsmitteltank 120 geführt werden kann. In diesem Rücklauf 160 ist beispielhaft eine Blende 161 angeordnet, die einen örtlichen Strömungswiderstand bietet.

In Figur 2 ist rein schematisch eine als Membranpumpe ausgebildete Pumpe 200, wie sie im Rahmen eines erfindungsgemäßen Verfahrens verwendet werden kann, gezeigt, um deren Funktionsweise zu erläutern.

Die Pumpe 200 weist einen Pumpenraum 210 mit zwei Anschlüssen 211 und 212 auf und ist mittels einer flexiblen Membran 215 verschlossen. An die beiden Anschlüsse sind Leitungen mit Ventilen 230 bzw. 231 angebracht, sodass beispielsweise über das Ventil 230 Fluid in den Pumpenraum eingesaugt und über das Ventil 231 aus dem Pumpenraum verdrängt werden kann.

Weiterhin weist die Pumpe 200 einen elektromagnetischen Linearaktor 220 auf, der wiederum einen Elektromagneten 221 aufweist, an den eine Spannung U angelegt werden kann, sowie einen beweglichen Anker 222. Der Anker 222 ist mittels einer Feder 223 mit Federkraft F_{F} beaufschlagt und mit der Membran verbunden. Mittels des Elektromagneten kann eine magnetische Kraft F_{M} auf den Anker 222 ausgeübt werden, die der Federkraft F_{F} entgegengerichtet ist.

Der elektromagnetische Linearaktor 220 bzw. dessen Anker 222 kann nun in eine erste Richtung R₁ bewegt werden, indem keine magnetische Kraft ausgeübt wird oder eine solche zumindest geringer ist als die Federkraft. Damit wird Fluid in den Pumpenraum gesaugt. Weiterhin kann der elektromagnetische Linearaktor 220 bzw. dessen Anker 222 in eine zweite, der ersten Richtung entgegensetzte Richtung R₂ bewegt werden, indem eine magnetische Kraft ausgeübt wird, die größer ist als die Federkraft. Damit wird Fluid aus dem Pumpenraum verdrängt.

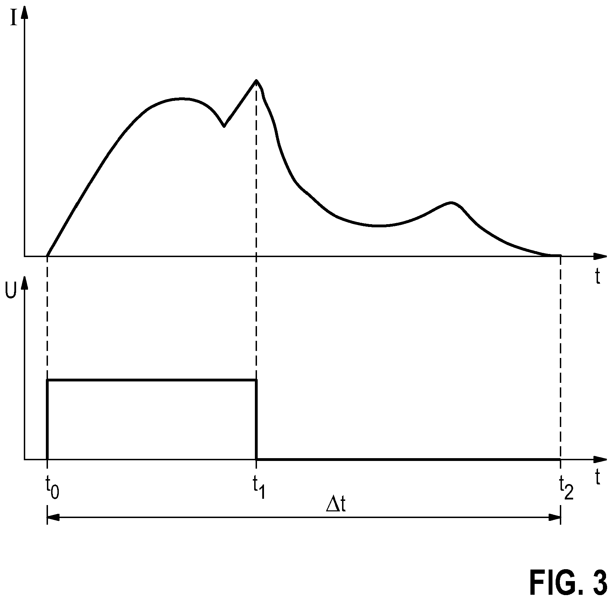

In Figur 3 zeigt schematisch einen üblichen Ablauf zur Betätigung einer Pumpe, wie sie im Rahmen eines nicht-erfindungsgemäßen Verfahrens verwendet werden kann und wie sie vorstehend näher erläutert wurde. Hierzu sind eine Spannung U, die an den elektromagnetischen Linearaktor bzw. dessen Spule angelegt wird, sowie ein Strom I, der in dieser Spule fließt, über der Zeit t aufgetragen. Konkrete Werte für Spannung und Strom sind hierbei wenig relevant und daher nicht gezeigt.

Zum Zeitpunkt t₀ wird die Spannung angelegt, woraufhin der Strom I ansteigt. Die Spannung bleibt dabei bis zum Zeitpunkt t₁ angelegt. Der Strom I hat hier den höchsten Wert bereits erreicht und fällt, nachdem die Spannung weggenommen wurde, langsam ab, bis er zum Zeitpunkt t₂ vollständig abgeklungen ist. Aufgrund der Bewegung des Ankers im Magnetfeld und der damit einhergehenden Gegeninduktion gibt es eine zusätzliche Stromspitze.

Der in der Spule fließende Strom I ist ein Maß für das vom Elektromagneten erzeuge magnetische Feld und damit auch für die auf den Anker wirkende magnetische Kraft. Im Wesentlichen ergibt sich damit zwischen den Zeitpunkten t₀ und t₁ eine Bewegung gegen die Federkraft, wobei hier allerdings beachtet werden muss, dass zunächst die magnetische Kraft soweit aufgebaut werden muss, bis sie die Federkraft übersteigt, zwischen den Zeitpunkten t₁ und t₂ eine Bewegung in Richtung der Federkraft, wobei hier allerdings beachtet werden muss, dass zunächst die magnetische Kraft soweit sinken muss, bis sie die Federkraft unterschreitet. Anschließend kann der Vorgang von vorne beginnen, d.h. eine Zeitdauer eines solchen Zyklus mit Hin- und Rückbewegung des Ankers entspricht Δt.

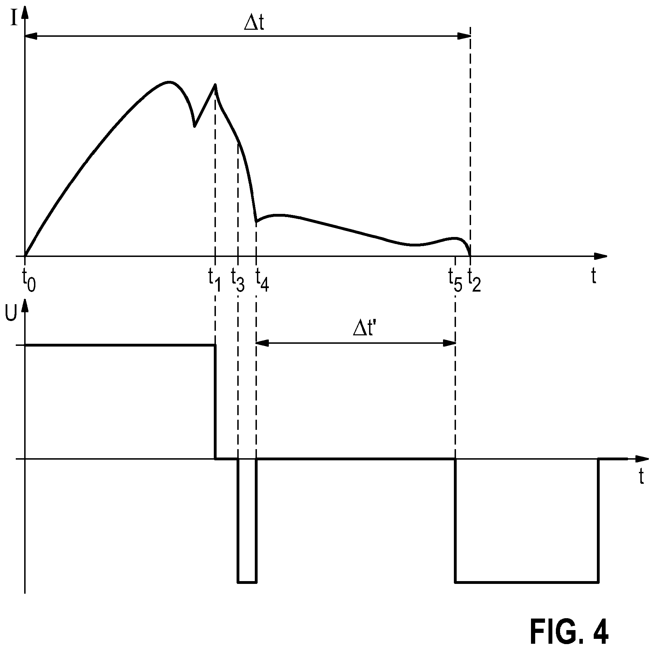

In Figur 4 ist nun schematisch ein Ablauf des erfindungsgemäßen Verfahrens in einer bevorzugten Ausführungsform dargestellt. Auch hierzu sind die Spannung U und der Strom I über der Zeit t aufgetragen.

Auch hier wird zunächst zum Zeitpunkt t₀ die Spannung angelegt, woraufhin der Strom I ansteigt. Die Spannung bleibt dabei bis zum Zeitpunkt t₁ angelegt. Der Strom I hat hier den höchsten Wert erreicht und fällt, nachdem die Spannung weggenommen wurde, langsam ab.

Zum Zeitpunkt t₃, also kurz nach dem Zeitpunkt t₁, wir dann aber eine der zuvor angelegten Spannung entgegengesetzt gepolte Spannung angelegt, sodass der Strom I schneller abfällt und damit die magnetische Kraft schneller, und zwar aktiv, abgebaut wird.

Ab dem Zeitpunkt t4 wird diese Spannung wieder weggenommen bzw. abgeschaltet und erst nach einer Zeitdauer Δt' zum Zeitpunkt t₅ wieder angelegt, sodass die in dem elektromagnetischen Linearaktor vorhandene magnetische Energie vollständig aktiv - und damit schneller als es von selbst der Fall wäre - abgebaut wird, was zum Zeitpunkt t₂ der Fall ist. Die Spannung mit dieser Polung kann noch länger anliegen, bevor sie beispielsweise wieder zum Aufbau der magnetischen Kraft geändert wird. Ein Stromfluss in Gegenrichtung kann durch eine Diode o.ä. verhindert werden.

Auf diese Weise kann der elektromagnetische Linearaktor schneller zurückbewegt werden, was an der kürzeren Zeitdauer Δt gegenüber dem Ablauf in Figur 3 zu sehen ist, während zugleich aber eine Geräuschentwicklung reduziert wird.

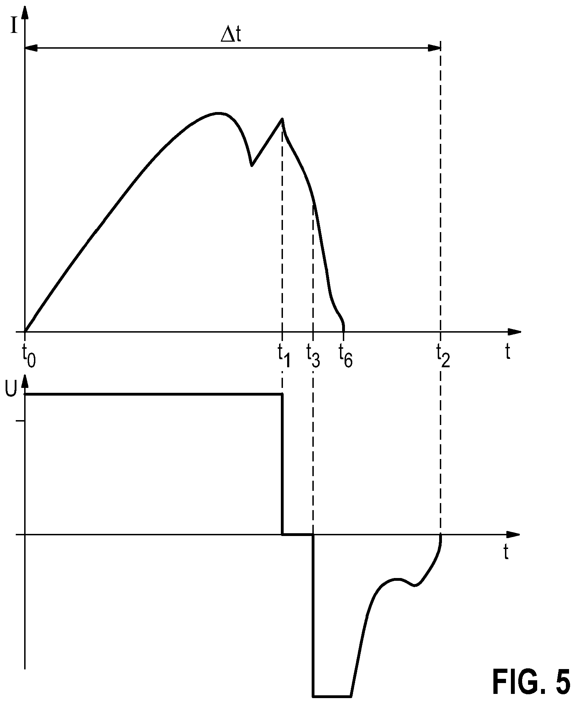

In Figur 5 ist schematisch ein Ablauf eines weiteren nicht-erfindungsgemäßen Verfahrens dargestellt. Auch hierzu sind die Spannung U und der Strom I über der Zeit t aufgetragen.

Auch hier wird zunächst zum Zeitpunkt t₀ die Spannung angelegt, woraufhin der Strom I ansteigt. Die Spannung bleibt dabei bis zum Zeitpunkt t₁ angelegt. Der Strom I hat hier den höchsten Wert erreicht und fällt, nachdem die Spannung zum Zeitpunkt t₁ weggenommen bzw. abgeschaltet wurde, langsam ab.

Zum Zeitpunkt t₃, also kurz nach dem Zeitpunkt t₁, wir eine der zuvor angelegten Spannung entgegengesetzt gepolte Spannung angelegt, sodass der Strom I schneller abfällt und damit die magnetische Kraft schneller, und zwar aktiv, abgebaut wird, wie auch beim Ablauf gemäß Figur 4. Allerdings wird hier die in dem elektromagnetischen Linearaktor vorhandene magnetische Energie sofort vollständig aktiv abgebaut, was zum Zeitpunkt t₆ der Fall ist.

Der Anker bewegt sich hier noch weiter, d.h. der Abbau der magnetischen Energie ist schneller beendet als die Bewegung des Ankers bzw. Linearaktors. Am Spannungsverlauf ist dies anhand des abklingenden Verlaufs aufgrund induzierter Spannung zu sehen. Erst zum Zeitpunkt t₂ ist dann die Bewegung beendet, jedoch kann auf diese Weise der elektromagnetische Linearaktor noch schneller zurückbewegt werden, was an der noch kürzeren Zeitdauer Δt gegenüber dem Ablauf in Figur 4 zu sehen ist.

## Patentansprüche

1. Verfahren zum Betreiben einer Pumpe (200) mit einem Pumpenraum (210), der wenigstens einen Anschluss (211, 212) aufweist, und einem mittels Feder kraft (F_{F}) beaufschlagten elektromagnetischen Linearaktor (220), der durch Anlegen einer Spannung (U) gegen die Federkraft (F_{F}) bewegbar ist,wobei durch eine Bewegung des elektromagnetischen Linearaktors (220) in eine erste Richtung (R₁) Fluid durch einen Anschluss (211) in den Pumpenraum (210) gesaugt wird, und
wobei durch eine Bewegung des elektromagnetischen Linearaktors (220) in eine zweite Richtung (R2) Fluid durch einen Anschluss (212) aus dem Pumpenraum (210) verdrängt wird,
wobei bei der Bewegung des elektromagnetischen Linearaktors (22) in Richtung der Federkraft (FF) eine Spannung (U) derart angelegt wird, dass, nach Beginn der Bewegung die in dem elektromagnetischen Linearaktor (220) vorhandene magnetische Energie zu einem vorgegebenen Anteil kleiner 100% aktiv abgebaut wird, **dadurch gekennzeichnet, dass**
der vorgegebene Anteil zwischen 10% und 50% beträgt,
wobei die Spannung (U) vor oder bei Ende der Bewegung erneut angelegt wird, und zwar derart, dass die in dem elektromagnetischen Linearaktor (220) noch vorhandene magnetische Energie vollständig aktiv abgebaut wird, wobei zwischen dem Anlegen der Spannung (U), mit dem der vorgegebene Anteil der magnetischen Energie aktiv abgebaut wird, und dem Anlegen der Spannung (U), mit der die in dem elektromagnetischen Linearaktor (220) vorhandene magnetische Energie vollständig aktiv abgebaut wird, wenigstens eine vorgegebene Zeitdauer (Δt') und/oder Bewegungsstrecke des elektromagnetischen Linearaktors (220) vorgesehen werden.

2. Verfahren nach einem der vorstehenden Ansprüche, wobei als Pumpe (200) eine Membranpumpe verwendet wird.

3. Verfahren nach einem der vorstehenden Ansprüche, wobei die Pumpe (200) in einer Fördereinheit (110) oder als Fördereinheit eines SCR-Versorgungssystems verwendet wird.

4. System (100) aus einer Pumpe (200) mit einem Pumpenraum (210), der wenigstens einen Anschluss (211, 212) aufweist, und einem mittels Federkraft (F_{F}) beaufschlagten elektromagnetischen Linearaktor (220) sowie einer Recheneinheit (150), die dazu eingerichtet ist, alle Verfahrensschritte eines Verfahrens nach einem der vorstehenden Ansprüche durchzuführen.

5. System (100) nach Anspruch 4, das als SCR-Versorgungssystem ausgebildet ist.

6. Computerprogramm, das ein System (100) nach Anspruch 4 oder 5 dazu veranlasst, alle Verfahrensschritte eines Verfahrens nach einem der Ansprüche 1 bis 3 durchzuführen, wenn es auf der Recheneinheit (150) ausgeführt wird.

7. Maschinenlesbares Speichermedium mit einem darauf gespeicherten Computerprogramm nach Anspruch 6.

## Claims

1. Method for operating a pump (200) having a pump chamber (210) which has at least one connection (211, 212), and an electromagnetic linear actuator (220) which is acted on by a spring force (F_{F}) and which can be moved counter to the spring force (F₁) by applying a voltage (U), wherein, by means of a movement of the electromagnetic linear actuator (220) in a first direction (Ri), fluid is sucked into the pump chamber (210) through a connection (211), and
wherein, by means of a movement of the electromagnetic linear actuator (220) in a second direction (R₂), fluid is displaced out of the pump chamber (210) through a connection (212),
wherein, during the movement of the electromagnetic linear actuator (22) in the direction of the spring force (F_{F}), a voltage (U) is applied in such a way that after the start of the movement, the magnetic energy present in the electromagnetic linear actuator (220) is dissipated actively to a predefined proportion of less than 100%,
**characterized in that**
the predefined proportion lies between 10% and 50%,
wherein the voltage (U) is reapplied before or at the end of the movement, specifically in such a way that the magnetic energy that is still present in the electromagnetic linear actuator (220) is completely actively dissipated,
wherein, between the application of the voltage (U) with which the predefined proportion of the magnetic energy is actively dissipated and the application of the voltage (U) with which the magnetic energy present in the electromagnetic linear actuator (220) is completely actively dissipated, at least a predefined time period (Δt') and/or a movement distance of the electromagnetic linear actuator (220) are provided.

2. Method according to one of the preceding claims, wherein a diaphragm pump is used as the pump (200).

3. Method according to one of the preceding claims, wherein the pump (200) is used in a delivery unit (110) or as a delivery unit of an SCR supply system.

4. System (100), comprising a pump (200) having a pump chamber (210) which has at least one connection (211, 212), and an electromagnetic linear actuator (220) which is acted on by a spring force (F_{F}), and also a computing unit (150), which is set up to carry out all the method steps of a method according to one of the preceding claims.

5. System (100) according to Claim 4, which is designed as an SCR supply system.

6. Computer program, which causes a system (100) according to Claim 4 or 5 to carry out all the method steps of a method according to one of Claims 1 to 3 when it is executed on the computing unit (150).

7. Machine-readable storage medium having a computer program according to Claim 6 stored thereon.

## Revendications

1. Procédé permettant de faire fonctionner une pompe (200) pourvue d'un espace de pompage (210) qui présente au moins un raccord (211, 212), et d'un actionneur linéaire électromagnétique (220) sollicité au moyen d'une force de ressort (F_{F}) et qui peut être déplacé contre la force de ressort (F_{F}) par l'application d'une tension (U), un déplacement de l'actionneur linéaire électromagnétique (220) dans une première direction (R₁) aspirant un fluide à travers un raccord (211) dans l'espace de pompage (210), et
un déplacement de l'actionneur linéaire électromagnétique (220) dans une deuxième direction (R2) chassant le fluide de l'espace de pompage (210) à travers un raccord (212),
dans lequel, lors du déplacement de l'actionneur linéaire électromagnétique (22) en direction de la force de ressort (FF), une tension (U) est appliquée de telle sorte qu'après le début du déplacement, l'énergie magnétique présente dans l'actionneur linéaire électromagnétique (220) est réduite activement jusqu'à une part prédéfinie inférieure à 100 %,
**caractérisé en ce que** la part prédéfinie est comprise entre 10 % et 50 %,
dans lequel la tension (U) est à nouveau appliquée avant ou à la fin du déplacement, notamment de telle sorte que l'énergie magnétique toujours présente dans l'actionneur linéaire électromagnétique (220) est en totalité réduite activement,
dans lequel, entre l'application de la tension (U) par laquelle la part prédéfinie de l'énergie magnétique est réduite activement, et l'application de la tension (U) par laquelle l'énergie magnétique présente dans l'actionneur linéaire électromagnétique (220) est en totalité réduite activement, au moins une période prédéfinie (Δt') et/ou une course de déplacement de l'actionneur linéaire électromagnétique (220) est/sont prévue(s).

2. Procédé selon l'une quelconque des revendications précédentes, dans lequel une pompe à diaphragme est utilisée comme pompe (200).

3. Procédé selon l'une quelconque des revendications précédentes, dans lequel la pompe (200) est utilisée dans une unité de refoulement (110) ou comme une unité de refoulement d'un système d'alimentation à RCS.

4. Système (100) composé d'une pompe (200) pourvue d'un espace de pompage (210) qui présente au moins un raccord (211, 212), et d'un actionneur linéaire électromagnétique (220) sollicité au moyen d'une force de ressort (F_{F}), ainsi que d'une unité de calcul (150) qui est conçue pour exécuter toutes les étapes de procédé d'un procédé selon l'une quelconque des revendications précédentes.

5. Système (100) selon la revendication 4, qui est réalisé sous la forme d'un système d'alimentation à RCS.

6. Programme informatique qui fait qu'un système (100) selon la revendication 4 ou 5 exécute toutes les étapes de procédé d'un procédé selon l'une quelconque des revendications 1 à 3, lorsqu'il est exécuté sur l'unité de calcul (150).

7. Support de stockage lisible par machine, comprenant un programme informatique selon la revendication 6, stocké sur celui-ci.
